# EUROPÄISCHE PATENTSCHRIFT

(11) **EP 4 328 462 B1**
(45) Veröffentlichungstag und Bekanntmachung des Hinweises auf die Patenterteilung: **22.10.2025**
(21) Anmeldenummer: 23191910.1
(22) Anmeldetag: 17.08.2023
(51) Int. Cl.: F16D 7/02, F16C 19/10

(54) **STELLKRAFTKUPPLUNG**
ACTUATING FORCE COUPLING
EMBRAYAGE À FORCE DE RÉGLAGE

(30) Priorität: 26.08.2022 DE 102022208875
(43) Veröffentlichungstag der Anmeldung: 28.02.2024
(73) Patentinhaber: Siemens Mobility GmbH, 80997 München (DE)
(72) Erfinder: Woolston, Sven, 12247 Berlin (DE); Schulze, Michael, 12557 Berlin (DE)
(74) Vertreter: Siemens Patent Attorneys

(56) Entgegenhaltungen:
- WO-A1-2022/089684
- CN-A- 1 152 084
- DE-A1- 3 900 121
- DE-A1- 4 427 809
- US-A- 4 269 460
- US-A1- 2023 396 118

## Beschreibung

Die Erfindung betrifft eine Stellkraftkupplung, insbesondere für einen elektromechanischen Weichenantrieb im Bahnverkehr, mit einer um eine Axialrichtung der Stellkraftkupplung herum rotierbar antreibbaren Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist, das Kupplungsgehäuse mittels zweier koaxialer Axialrillenkugellager auf der Kupplungsnabe drehbar gelagert ist und mittels einer betreffenden zweiteiligen Druckstückanordnung ein jeweiliges Axialrillenkugellager in Axialrichtung mechanisch zusammengespannt in der Stellkraftkupplung eingerichtet ist.

Eine gattungsgemäße Stellkraftkupplung ist aus der Druckschrift DE 44 27 809 A1 bekannt.

Darüber hinaus ist aus der Druckschrift WO 2022/089684 A1 eine elektrische Maschine bekannt, bei der ein Rotor gegenüber einem Stator mittels zweier axial beabstandeter Wälzlager drehbar gelagert ist und wenigstens eines der Wäzlager durch ein Federelement axial vorgespannt ist.

Die Erfindung betrifft auch eine elektromechanische Stelleinrichtung für einen Weichenantrieb sowie einen Weichenantrieb für den Bahnverkehr.

Belastbare und zuverlässige Weichen sind ein entscheidender Faktor für eine Verbesserung einer Streckennutzung im Bahnverkehr. Insbesondere bei den wachsenden Anforderungen an die modernen Bahnen, z. B. im Fernverkehr, wo auch hohe Geschwindigkeiten auf einem abzweigenden Gleis der Weiche gefahren werden. Aber auch im Nah- und Güterverkehr entstehen hohe Belastungen, welche auf die Weichen wirken. Ein Weichenantrieb spielt daher eine wichtige Rolle für eine Sicherheit im Bahnverkehr. Er sollte präzise arbeiten, zuverlässig und hoch belastbar sein, sowie wirtschaftlich und vielseitig im Nah- und Fernverkehr für Weichen möglichst aller Bauarten und Spurweiten einsetzbar sein.

Ein elektromechanischer Weichen(stell)antrieb hat insbesondere folgende Aufgaben sicher und zuverlässig zu erledigen. Ein Umstellen einer Weiche, ein Festhalten der Weichenzungen der Weiche in deren Endlagen, ein mechanisches Sichern des Weichenverschlusses, ein elektrisches/elektronisches Melden eines Stellvorgangs und einer Endlage der Weichenzungen an ein Stellwerk, ein Öffnen der Auffahrkupplung im Weichenantrieb beim Auffahren der Weiche durch ein Fahrzeug und Abgeben einer Auffahrmeldung an eine Überwachungseinrichtung, etc.

Nicht nur während eines Stellbetriebs des Weichenantriebs selbst, sondern auch abseits davon werden beim Überfahren der Weiche, insbesondere bei einem Auffahren der Weiche, mit einem Fahrzeug hohe Kräfte in den Weichenantrieb eingeleitet, welche die Stellkraftkupplung schädigen und so langfristig zum Ausfall der Stellkraftkupplung und somit des Weichenantriebs führen können. - Es ist daher eine Aufgabe der Erfindung, eine verbesserte Stellkraftkupplung für einen Weichenantrieb sowie einen verbesserten Weichenantrieb anzugeben.

Die Aufgabe der Erfindung ist mittels einer Stellkraftkupplung, insbesondere für einen elektromechanischen Weichenantrieb im Bahnverkehr, mittels einer elektromechanischen Stelleinrichtung für einen Weichenantrieb im Bahnverkehr, und mittels eines Weichenantriebs für den Bahnverkehr, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Untersuchungen von Weichenantrieben für den Bahnverkehr, welche eine bereits lange Einsatzdauer absolviert haben, haben gezeigt, dass ein derzeitiges Problem einer Lebensdauerbegrenzung der Weichenantriebe, trotz deren bereits hohen durchschnittlichen Lebensdauern, die während einer Lebensdauer eingeleiteten Kräfte in einen Weichenantrieb und dort insbesondere die in eine Stellkraftkupplung eingeleiteten Axialkräfte sind. Diese Axialkräfte schädigen insbesondere die dort eingesetzten dreiteiligen Axialrillenkugellager mit ihren zwei Axiallagerschalen und einem Kugelkäfig mit den Wälzkugeln.

Einem Funktionsprinzip einer Stellkraftkupplung folgend ergeben sich ferner während einer Stellkraftbegrenzung der Stellkraftkupplung kurze kraftfreie zeitliche Momente (rechter/linker Anschlag einer Überlastkupplung der Stellkraftkupplung). Dies führt bei den eingesetzten dreiteilig losen Axialrillenkugellagern zu einem Trennen eines mechanischen Kontaktverbands der Axiallagerschalen und des Kugelkäfigs.

D. h. bei einem Entlasten des Axialrillenkugellagers hebt sich dessen Kontaktverband für eine kurze Zeitspanne auf und bekommt ,Luft'. Der Kugelkäfig mit seinen Wälzkugeln fällt aus einer Rille einer Axiallagerschale heraus und erst bei einem Einsetzen einer Gegenlast fällt der Kugelkäfig schlagartig wieder in die betreffende Rille ein. Das Trennen des Kontaktverbands kann zu einer Beschädigung des Axialrillenkugellagers und damit zu einer weniger gut kontrollierbaren Funktion der Stellkraftkupplung führen.

Wie eingangs erwähnt, umfasst die erfindungsgemäße Stellkraftkupplung eine um eine Axialrichtung der Stellkraftkupplung herum rotierbar antreibbare Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist, das Kupplungsgehäuse mittels zweier koaxialer Axialrillenkugellager auf der Kupplungsnabe drehbar gelagert ist und mittels einer betreffenden zweiteiligen Druckstückanordnung ein jeweiliges Axialrillenkugellager in Axialrichtung mechanisch zusammengespannt in der Stellkraftkupplung eingerichtet ist.

D. h. natürlich auch umgekehrt, dass die Kupplungsnabe mittels der zwei koaxialen Axialrillenkugellager innen im Kupplungsgehäuse drehbar gelagert ist. Statt einem Axialrillenkugellager ist auch ein Axialkugellager anwendbar. Hierbei existiert die mechanische Zusammenspannung des jeweiligen Axialrillenkugellagers mittels der zweiteiligen Druckstückanordnung insbesondere in einem geschlossenen Zustand (keine Stellkraftbegrenzung der Stellkraftkupplung, Ruhezustand und Umstellen der Stellkraftkupplung) und bevorzugt auch einem ausgelösten Zustand (Stellkraftbegrenzung der Stellkraftkupplung) der Überlastkupplung der Stellkraftkupplung.

In einem montierten Zustand der Kupplungsnabe auf der Gewindespindel bilden diese eine drehfeste Spindel-Nabe-Verbindung, d. h. eine Rotationsbewegung der Kupplungsnabe ist auf die Gewindespindel übertragbar. - D. h. ist die Stellkraftkupplung z. B. auf der Gewindespindel eines Weichenantriebs montiert, so kann die von der Stellkraftkupplung rotierbar antreibbare Gewindespindel mittels eines auf ihr eingerichteten Kugelgewindetriebs ihre Rotationsbewegung in eine lineare Stellbewegung des Kugelgewindetriebs abseits der Stellkraftkupplung wandeln. - Alternativ kann der Kugelgewindetrieb zwischen der Kupplungsnabe und der Gewindespindel eingerichtet sein.

Eine Dreiteiligkeit der Axialrillenkugellager ist dergestalt ein Problem, dass die zwei Lagerschalen und der Kugelkäfig als eine Baugruppe einen in Axialrichtung losen Kontaktverband bilden, welcher darüber hinaus nicht zusammengehalten ist. - Bei einem mechanisch permanent vorgespannten Axialrillenkugellager kann die Auflösung des Montageverbunds des Axialrillenkugellagers vermieden werden. D. h. bei dem Axialrillenkugellager ist ein Auftreten von ,Luft' wenigstens reduziert, da dessen Montageverbund aufgrund der Axiallager-Vorspanneinrichtung auch in einem axiallastfreien Zustand des Axialrillenkugellagers gegeben ist. Hierdurch lassen sich undefinierte Lagerzustände, unzeitiger und unbestimmter Verschleiß, eine über die Zeit entstehende höhere Stellkraft, Lagerschäden und erhöhte Kosten nach Auslieferung (NCC-Kosten) vermeiden.

Erfindungsgemäß ist vorgesehen, dass ein erstes Druckstück der zweiteiligen Druckstückanordnung als ein Drucktopf und ein zweites Druckstück der zweiteiligen Druckstückanordnung als ein Druckdeckel ausgebildet ist, wobei der Drucktopf in einem radialen Außenabschnitt eine als ein innenwandiger Zentriertrichter oder Zentrierkonus ausgebildete Zentrierfläche für eine Zentrierfläche des Druckdeckels aufweist, und der Druckdeckel an einem radialen Außenrand die Zentrierfläche für die Zentrierfläche des Drucktopfs aufweist,welche als Zentrieraußenrand mit Zentrierkonus ausgebildet ist.

Das jeweilige Axialrillenkugellager kann als eine dreiteilig lose oder eine einteilige Baugruppe ausgebildet sein. Ferner können die Axiallagerschalen des jeweiligen Axialrillenkugellagers in horizontaler Axialrichtung angeordnet sein. Des Weiteren kann das jeweilige Axialrillenkugellager selbst als ein spielarmes oder ein mechanisch vorgespanntes Axialrillenkugellager ausgebildet sein.

Die Stellkraftkupplung kann derart ausgebildet sein, dass in einem Stellbetrieb der Stellkraftkupplung die Überlastkupplung im Wesentlichen geschlossen bleibt. Im Stellbetrieb der Stellkraftkupplung rotiert die Kupplungsnabe die Gewindespindel und stellt dieser eine Stellkraft zur Verfügung. Die Stellkraft stammt aus dem rotierbaren Kupplungsgehäuse, welches über die geschlossene Überlastkupplung im Wesentlichen drehfest mit der Kupplungsnabe verbunden ist.

Die Stellkraftkupplung kann ferner derart ausgebildet sein, dass bei einem Begrenzen einer Stellkraft der Gewindespindel durch die Stellkraftkupplung, die Überlastkupplung (gelöst ist. Beim Begrenzen der Stellkraft, z. B. weil die Gewindespindel nicht mehr weiterrotiert werden kann (z. B. Stelleinrichtung (vgl. unten) in Endlage (erster oder zweiter Anschlag), ggf. auch Endlage(n) der Weichenzungen oder Endlage des Herzstücks), begrenzt die gelöste Überlastkupplung eine von der Kupplungsnabe auf die Gewindespindel aufgeprägte Stellkraft.

Des Weiteren kann die Stellkraftkupplung derart ausgebildet sein, dass beim Begrenzen der Stellkraft die axial gegeneinander vorgespannten Lamellen der Überlastkupplung aneinander vorbeigleiten. D. h. die Lamellen der Überlastkupplung sind beim Begrenzen der Stellkraft bevorzugt nicht ausrückbar, sondern behalten ihre gegenseitige Vorspannkraft. Beim Begrenzen der Stellkraft wird eine Umfangskraft zwischen den Lamellen größer als eine gegenseitige Haftkraft aufgrund ihrer mechanischen Vorspannkraft.

Die Kupplungsnabe kann radial innerhalb der Überlastkupplung eingerichtet sein. Hierbei kann sich die Kupplungsnabe über eine betreffende Druckstückanordnung mit einem jeweiligen Axialrillenkugellager in der Überlastkupplung axial abstützen. Ferner können die zwei Druckstückanordnungen auf ein Lamellenpaket der Überlastkupplung axial vorgespannt einwirken. D. h. die Überlastkupplung ist als eine Lamellen-Überlastkupplung ausgebildet.

Des Weiteren kann das Lamellenpaket der Überlastkupplung axial zwischen den Axialrillenkugellagern eingerichtet sein. Bevorzugt trägt die Kupplungsnabe radial außen die wenigstens eine Innenlamelle, und hält das Kupplungsgehäuse radial innen die wenigstens eine Außenlamelle der Überlastkupplung. Und natürlich ist die jeweilige Innenlamelle und die jeweilige Außenlamelle drehfest auf der Kupplungsnabe bzw. im Kupplungsgehäuse vorgesehen und dort axial verschieblich gelagert.

Die Kupplungsnabe kann sich über ein jeweiliges Axialrillenkugellager axial abstützen. Hierbei kann eine kupplungsseitige Axiallagerschale des jeweiligen Axialrillenkugellagers axial unmittelbar oder mittelbar an der Kupplungsnabe ansitzen. Ferner kann zwischen der Kupplungsnabe und dem jeweiligen Axialrillenkugellager eine Innenschulter der Druckstückanordnung eingerichtet sein. D. h. diese Ausführungsform lehrt eine mittelbare Abstützung der Kupplungsnabe ggü. des jeweiligen Axialrillenkugellagers. Eine bzw. die kupplungsseitige Axiallagerschale des jeweiligen Axialrillenkugellagers kann radial unmittelbar auf der Kupplungsnabe sitzen. Ferner kann die Druckstückanordnung axial unmittelbar oder mittelbar an einem Lamellenpakt der Überlastkupplung ansitzen.

Die beiden Druckstücke können das jeweilige Axialrillenkugellager axial zwischen sich aufnehmen. Ferner kann die mechanische Zusammenspannung in Axialrichtung unmittelbar von den beiden Druckstücken auf das jeweilige Axialrillenkugellager ausgeübt sein.

Des Weiteren kann die betreffende Druckstückanordnung und das jeweilige Axialrillenkugellager als eine bevorzugt dreiteilige oder fünfteilige Ringanordnung ausgebildet sein. Diese z. B. fünf Teile, wobei ggf. wenigstens ein Teil als eine Baugruppe ausgebildet sein kann, sind die beiden Druckstücke, die beiden Axiallagerschalen und der Kugelkäfig (inkl. der Wälzkugeln). Bei drei Teilen kann z. B. das Axialrillenkugellager als eine einzige zusammengehaltene Baugruppe ausgebildet sein.

Bei geschlossener Überlastkupplung in der Stellkraftkupplung kann eine Vorspanneinrichtung eine mechanische Vorspannkraft axial auf das zweite Druckstück ausüben. Hierbei sitzt die Vorspanneinrichtung axial abseits des zweiten Druckstücks bevorzugt an einem Einstellglied der Stellkraftkupplung an. Ferner kann dabei das zweite Druckstück eine mechanische Vorspannkraft axial auf das jeweilige Axialrillenkugellager ausüben. Des Weiteren können das jeweilige Axialrillenkugellager eine mechanische Vorspannkraft axial auf das erste Druckstück ausüben. Darüber hinaus kann das erste Druckstück eine mechanische Vorspannkraft axial auf ein/das Lamellenpakt ausüben.

Hierbei können zwei solche Anordnungen (betreffende Vorspanneinrichtung, betreffendes zweites Druckstück, jeweiliges Axialrillenkugellager, betreffendes erstes Druckstück) gespiegelt in der Stellkraftkupplung eingerichtet sein, wobei die beiden zweiten Druckstücke das Lamellenpakt wenigstens bei geschlossener Überlastkupplung mit einer Zusammenspannkraft in Axialrichtung, d. h. durch in Axialrichtung aufeinander zugerichtete Kräfte, beaufschlagen.

Der Drucktopf und der Druckdeckel können jeweils eine Lageraufnahme für das jeweilige Axialrillenkugellager aufweisen. Eine einzelne Lageraufnahme kann dabei einen Radialbund und eine Axialschulter des Druckstücks aufweisen.

Der Druckdeckel kann eine Axialschulter für ein Zentrieren der Vorspanneinrichtung am Druckdeckel aufweisen.

Hierbei erstrecken sich die Axialschulter für die Vorspanneinrichtung und die Axialschulter für die Axiallagerschale in einander entgegengesetzte Richtungen.

Die Druckstückanordnung kann in Axialrichtung verlagerbar, das erste Druckstück kann in Umfangsrichtung verlagerbar oder festgelegt, und/oder das zweite Druckstück in Umfangsrichtung verlagerbar im Kupplungsgehäuse eingerichtet kann sein. - Die zwei Druckstückanordnungen können axial außen jeweils von einer/der Vorspanneinrichtung gegeneinander axial vorgespannt in der Stellkraftkupplung eingerichtet sein. Hierbei ist die betreffende Vorspanneinrichtung insbesondere eine Tellerfeder oder eine Tellerfederanordnung umfassend wenigstens zwei Tellerfedern.

Eine mechanische Vorspannung der jeweiligen Vorspanneinrichtung kann von einem jeweils axial außen an der Vorspanneinrichtung eingerichteten Einstellglied einstellbar und aufrechterhalten sein. Mittels eines Einstellglieds ist eine mechanische Vorspannung wenigstens der betreffenden Vorspanneinrichtung einstellbar. Das jeweilige Einstellglied kann innen im Kupplungsgehäuse eingerichtet sein, wobei das Einstellglied bevorzugt mittels einer Einstellverschraubung in Axialrichtung verstellbar im Kupplungsgehäuse eingerichtet ist.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:
die Fig. 1 eine Draufsicht auf eine herkömmliche Bahnweiche, deren Weichenzungen zum Stellen ihrer Fahrwege von einem Stellschieber eines Weichenantriebs der Weiche betätigbar sind,
die Fig. 2 eine Draufsicht auf einen oben offenen Weichenantrieb, wobei das mechanische, elektrische und elektromechanische Innere des Weichenantriebs lediglich grob schematisch dargestellt ist,
die Fig. 3 eine zentral und axial-radial geschnittene Perspektivansicht durch eine Stellkraftkupplung für einen Weichenantrieb im Bahnverkehr, z. B. den Weichenantrieb aus der Fig. 2, mit einem erfindungsgemäßen zweiteiligen Drückstück, und
die Fig. 4 die zwei Teile des erfindungsgemäßen zweiteiligen Drückstücks aus der Fig. 3 in zentral und axial-radial geschnittenen Seitenansichten (Fig. 5) in einem demontierten Zustand des Drückstücks.

Obwohl die Erfindung oben und im Folgenden detaillierter durch bevorzugte Ausführungsbeispiele näher beschrieben und illustriert ist, so ist die Erfindung nicht durch die offenbarten Ausführungsbeispiele eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen.

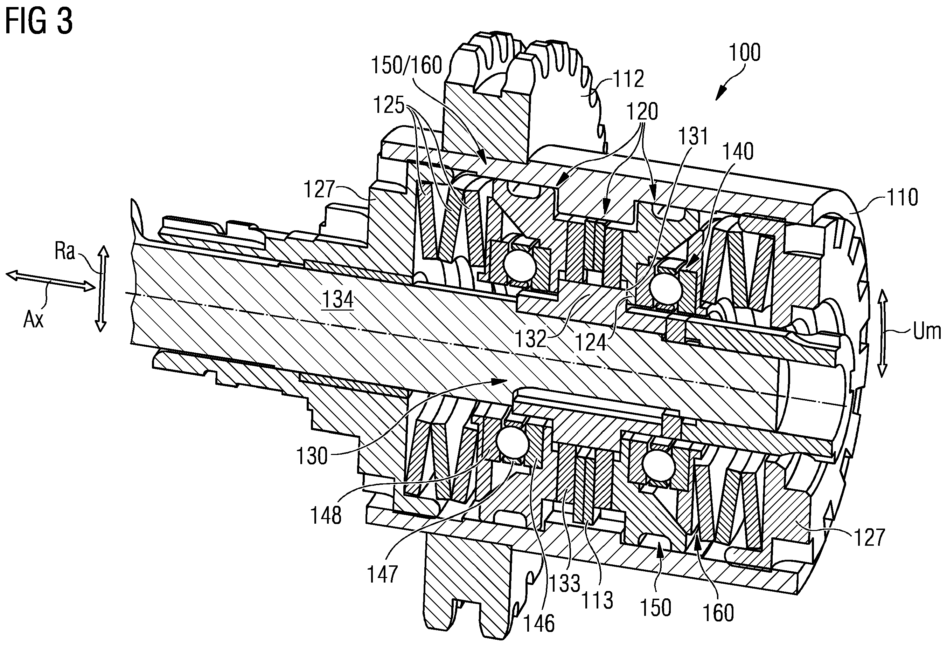

Die Erfindung ist im Folgenden anhand von Ausführungsbeispielen einer spezifischen Ausführungsform (Fig. 3) einer Variante einer Stellkraftkupplung 100 für einen Weichenantrieb 1 näher erläutert. In der Zeichnung sind nur diejenigen räumlichen Abschnitte eines Gegenstands der Erfindung dargestellt, welche für ein Verständnis der Erfindung notwendig sind. Die Erläuterung der Erfindung anhand der Zeichnung bezieht sich im Folgenden auf eine Axialrichtung Ax, eine Radialrichtung Ra und eine Umfangsrichtung Um der Stellkraftkupplung 100.

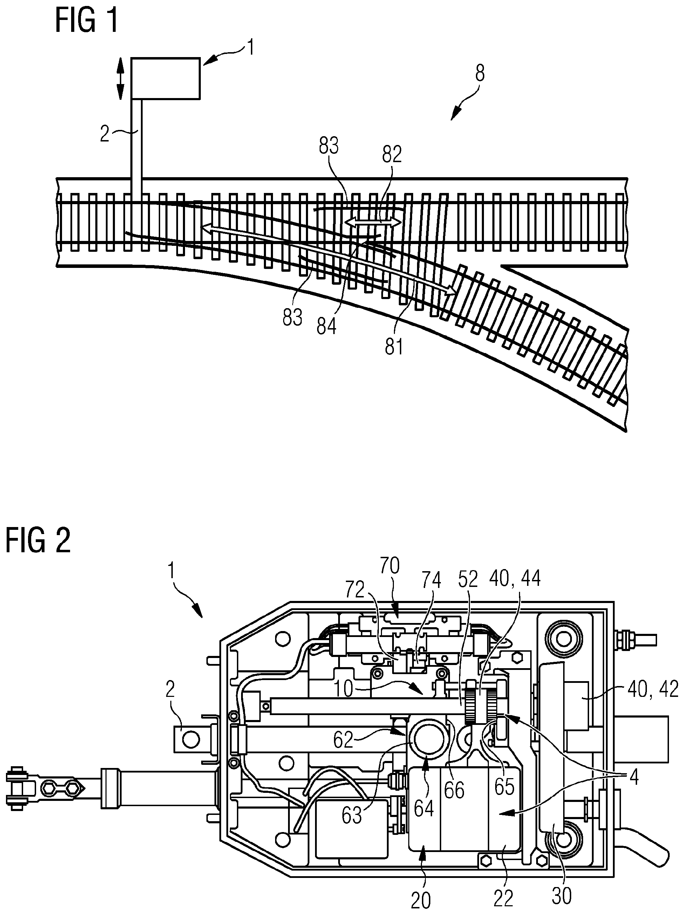

Die Fig. 1 zeigt eine Weiche 8, deren Schienen einen ersten Fahrweg 81 und einen zweiten Fahrweg 82 vorgeben. Der erste Fahrweg 81 ist derjenige, welcher bei einer entsprechenden Stellung der Weiche 8 von einem Gleis in Kurvenfahrt wegführt, während der zweite Fahrweg 82 geradeaus verläuft. Um die Weiche 8 zu stellen, ist ein Weichenantrieb 1 mit einem Stellschieber 2 vorgesehen, welcher in lateraler Richtung (Doppelpfeil am Weichenantrieb 1) hin- und herbewegbar ist und an einer inneren Weichenzunge und einer äußeren Weichenzunge der Weiche 8 befestigt ist. Auf diese Weise lassen sich die Weichenzungen betätigen, wodurch die Fahrwege 81, 82 für ein Bahnfahrzeug gestellt werden können. Die Sollpositionen des Stellschiebers 2 sind durch die Endlagen der Weichenzungen vorgegeben.

Zur zusätzlichen Führung sind Radlenker 83 sowie ein Herzstück 84 in der Weiche 8 eingerichtet. Diese verringern ein Risiko, dass ein Fahrzeug auf der Weiche 8 entgleist. Dies gilt insbesondere auch, wenn die Weiche 8 durch ein Fahrzeug aufgefahren wird. Ein Auffahren erfolgt, wenn sich aus einer Fahrtrichtung ein Fahrzeug nähert, obwohl die Weiche 8 für die andere Fahrtrichtung gestellt ist. - Während eines Betriebs des Weichenantriebs 1 treten z. B. durch Stellbewegungen, das Überfahren von Fahrzeugen und das Auffahren der Weiche 8 Stöße auf, welche insbesondere über den Stellschieber 2 in den Weichenantrieb 1 eingeleitet werden. Insbesondere ein Stellmodul 10 (vgl. Fig. 2) für den Stellschieber 2 muss diese Stöße auffangen, wodurch die für eine Spindel-Nabe-Verbindung 130 (vgl. Fig. 3) einer Stellkraftkupplung 42 (vgl. Fig. 2), 100 (vgl. Fig. 3) einer Stelleinrichtung 40 des Stellschiebers 2 zum Einsatz kommende Lagerung belastet wird.

Die Fig. 2 zeigt einen beispielhaften Weichenantrieb 1 mit einer aus dem Stellmodul 10 und einem Antriebsmodul 20 bestehenden Verstelleinrichtung 4 in einer ersten Endlage (Anschlag 65, vgl. unten), aus welcher der Weichenantrieb 1 in eine zweite Endlage (Anschlag 66) überführbar ist. Der Weichenantrieb 1 kann rechts oder links von einer Weiche 8 an einem Gleis positioniert sein und ist zum mechanischen Anschluss an hin- und herbewegbare Weichenteile, wie z. B. an Weichenzungen oder auch an ein betätigbares Herzstück 84, geeignet. Im Folgenden sei angenommen, dass der Weichenantrieb 1 mit seinem Stellschieber 2 an zwei Weichenzungen einer Weiche 8 mechanisch angeschlossen ist (vgl. Fig. 1).

Ein z. B. als ein Drehstrommotor 22 ausgebildeter Antriebsmotor 22 des Antriebsmoduls 20 rotiert über eine Getriebestufe 30, z. B. mit einem Ritzel, einem Zwischenrad und einem Großrad, oder einem Kettenantrieb (beides in Fig. 2 nicht dargestellt), eine Stellkraftkupplung 42. Eine Spindel-Nabe-Verbindung (nicht dargestellt) der Stellkraftkupplung 42 ist mit einer Gewindespindel 52 ausgebildet und weist eine auf der Gewindespindel 52 drehfest sitzende Kupplungsnabe der Stellkraftkupplung 42 auf. Die Stellkraftkupplung 42 wirkt auf einen Auffahrmechanismus 62, auch als Festhaltekupplungseinrichtung 62 bezeichenbar, des Stellmoduls 10. Der Auffahrmechanismus 62 umfasst ein Kupplungsgehäuse 63 und eine einstellbare Festhaltekupplung 64.

Beim Anlaufen des Antriebsmotors 22 rotiert die Kupplungsnabe und bewegt eine auf der Gewindespindel 52 drehsicher längsgeführte Verstellvorrichtung 44 der Stelleinrichtung 40 aus der dargestellten ersten Endlage, bei der die Verstellvorrichtung 44 an einem (ersten) Anschlag 65 des Stellmoduls 10 ansitzt, über einen Stellweg in einer Stellrichtung auf der Gewindespindel 52, bis sie an einem (zweiten) Anschlag 66 des Stellmoduls 10 ansitzt (also nach links in der Fig. 2). Hierfür ist zwischen der Stelleinrichtung 40 und der Gewindespindel 52 ein Kugelgewindetrieb eingerichtet, welcher die Rotationsbewegung der Gewindespindel 52 in eine lineare Stellbewegung der Stelleinrichtung 40 wandelt bzw. übersetzt. Das Kupplungsgehäuse 63 ist baulich vereinigt mit der einstellbaren Festhaltekupplung 64 des Auffahrmechanismus 62.

Bis zu einem Anschlagen der Verstellvorrichtung 44 am zweiten Anschlag 66 wird das Kupplungsgehäuse 63 aus der dargestellten ersten Endlage nach links in Stellrichtung mitgenommen und bewegt dabei über die Festhaltekupplung 64 den Stellschieber 2 aus der dargestellten ersten Endlage, in der sich der Stellschieber 2 weitgehend in einem Antriebsgehäuse 12 des Weichenantriebs 1 befindet, in eine zweite Endlage, in welcher der Stellschieber 2 am weitesten aus dem Antriebsgehäuse 12 ausgefahren ist. Hier nicht dargestellt ist ein Au-ßenverschluss des Stellschiebers 2, mit welchem der Stellschieber 2 an die in den Stellrichtungen hin und herbewegbaren Weichenzungen mechanisch anschließbar ist.

Beim Rücklauf des Weichenantriebs 1 bzw. des Stellschiebers 2 aus der zweiten Antriebslage (Verstellvorrichtung 44 sitzt am zweiten Anschlag 66 an) in die in der Fig. 2 gezeigte erste Antriebslage (Verstellvorrichtung 44 sitzt am ersten Anschlag 65 an) durchläuft die Stellkraftkupplung 42 den Stellweg zwischen den Anschlägen 66, 65 des Stellmoduls 10 in umgekehrter Richtung. Die Verstellvorrichtung 44 nimmt dabei bis zum ersten Anschlag 65 den Stellschieber 2 über das Kupplungsgehäuse 63 und die Festhaltekupplung 64 mit.

Die Festhaltekupplung 64 ist dazu ausgelegt, den Weichenantrieb 1 insbesondere bei einem Auffahren der Weiche 8 vor Beschädigungen zu schützen. Die Festhaltekupplung 64 spricht dann an und gibt den Stellschieber 2 frei, wenn die Weiche 8 aufgefahren wird und dabei hohe Kräfte von außen her in den Weichenantrieb 1 hineingetragen werden. Allerdings kann die Festhaltekupplung 64 nicht verhindern, dass auf die Lagerung (in Fig. 2 nicht dargestellt) der Stellkraftkupplung 42 Stöße übertragen werden.

Der Stellschieber 2 ist im Weichenantrieb 1 in seinen beiden Endlagen bevorzugt kraft- und formschlüssig festlegbar. Hierzu dienen ein erster Sperrschieber 72 und ein zweiter Sperrschieber 74 einer Sperrvorrichtung 70, wobei der erste Sperrschieber 72 für die erste Endlage in eine entsprechende erste Ausnehmung (nicht dargestellt) des Stellschiebers 2 einfallen kann, und der zweite Sperrschieber 74 für die zweite Endlage in eine entsprechende zweite Ausnehmung des Stellschiebers 2 einfallen kann (nicht dargestellt). Dies geschieht z. B. mittels Federvorrichtungen. - Beim Erreichen einer Endlage können wiederum Stöße auftreten, welche durch den Stellschieber 2 in die Lagerung der Stellkraftkupplung 42 eingeleitet werden und diese mechanisch belasten.

Bei einem Auffahren der durch den Weichenantrieb 1 gesteuerten Weiche 8 (nur möglich bei der Steuerung von Weichenzungen, nicht möglich bei der Steuerung eines Herzstückes) werden nach dem Lösen eines Weichenverschlusses von der Weichenseite her über den Stellschieber 2 erhebliche Kräfte in den Weichenantrieb 1 eingeleitet. Sobald dabei die Festhaltekraft der Festhaltekupplung 64 überschritten wird, setzt sich der Stellschieber 2 unter der Einwirkung der von außen auf ihn einwirkenden Kraft in die eine oder andere Richtung in Bewegung, in der vorliegenden Darstellung der Fig. 2 nach links. Dabei wird ein Federelement der Festhaltekupplung 64 mechanisch vom Stellschieber 2 entkoppelt.

Die Fig. 3 zeigt eine Stellkraftkupplung 100 für einen Weichenantrieb 1, z. B. den in der Fig. 2 dargestellten oder einen anderen. Die Stellkraftkupplung 100 weist ein einteiliges, einstückiges oder integrales Kupplungsgehäuse 110 mit z. B. einem darauf montiertem Antriebsrad 112 auf, welches an zwei einander gegenüberliegenden Stirnseiten mit jeweils einem Einstellglied 127, welche in der vorliegenden Ausführungsform vorzugsweise als Einstellmuttern 127 ausgebildet sind, verschlossen ist. Die Einstellglieder 127 weisen eine Durchgangsöffnung auf, durch welche eine Gewindespindel 134 hindurch durchführbar (Fig. 3 links) bzw. hinein- oder hindurcherstreckbar (Fig. 3 rechts) ist.

Die Gewindespindel 134 ist im Bereich des Kupplungsgehäuses 110 von einer Kupplungsnabe 132 als einen Antrieb der Gewindespindel 134 umschließbar, wobei sich ein jedes Einstellglied 127 an einer äußeren Umfangsfläche der Gewindespindel 134 durch ein Lager, vorliegend als ein Gleitlager ausgebildet, abstützt bzw. vice versa. Ein anderes Lager ist natürlich anwendbar. Die Gewindespindel 134 lässt sich auf diese Weise im Kupplungsgehäuse 110 nicht nur verdrehen, sondern auch in Axialrichtung Ax verschieben. Die Gewindespindel 134 und die Kupplungsnabe 132 bilden dabei eine drehfeste Spindel-Nabe-Verbindung 130, z. B. mittels einer Passfeder, einer Keilwellenverbindung etc. Ferner können die Gewindespindel 134 und die Kupplungsnabe 132 axialfest aneinander festgelegt sein, was z. B. mittels einer Schulter an der Gewindespindel 134 und einer Wellenmutter erfolgen kann. - Statt der Gewindespindel 134 kann die Kupplungsnabe 132 analog der Gewindespindel 134 im Kupplungsgehäuse 110 gelagert sein (nicht dargestellt).

Zwischen der Kupplungsnabe 132 und einer Innenseite des Kupplungsgehäuses 110 ist eine Überlastkupplung 120 ausgebildet. In der vorliegenden Ausführungsform ist die Überlastkupplung 120 eine Lamellenkupplung mit Außenlamellen 113 des Kupplungsgehäuses 110 und Innenlamellen 133 der Kupplungsnabe 132. Hierbei sind die Außenlamellen 113 und die Innenlamellen 133 als Reiblamellen 113, 133 (Lamellenpaket 113, 133) ausgebildet, wobei die Außenlamellen 113 axial Ax verschieblich und drehfest innen im Kupplungsgehäuse 110 und die Innenlamellen 133 axial Ax verschieblich und drehfest außen auf Kupplungsnabe 131 vorgesehen sind.

Das Lamellenpaket 113, 133 der Überlastkupplung 120 ist durch zwei Druckstückanordnungen 150/160 der Überlastkupplung 120 begrenzt, wobei eine einzelne Druckstückanordnung 150/160 zwei Druckstücke 150, 160 umfasst. Zwischen jedem Einstellglied 127 und einer betreffenden Druckstückanordnung 150/160 ist eine Vorspanneinrichtung 125 angeordnet, welche in Abhängigkeit von jedem Einstellglied 127 Vorspannkräfte auf die betreffende Druckstückanordnung 150/160 ausübt. Die Vorspanneinrichtung 125 ist in der vorliegenden Ausführungsform vorzugsweise eine Federeinrichtung 125, insbesondere eine Tellerfederanordnung 125. Andere Federn oder Federeinrichtungen sind natürlich anwendbar.

Durch ein Verdrehen eines oder beider Einstellglieder 127 kann eine Vorspannkraft und somit auch eine Auslösekraft der Überlastkupplung 120 eingestellt werden. In einem bevorzugten Ausführungsbeispiel werden beide Einstellglieder 127 um einen gleichen Betrag verdreht, sodass gleiche Vorspannkräfte auftreten. Mit einer ungleichen Einstellung können Richtungsabhängigkeiten ausgeglichen werden. - Ferner stützt sich die Kupplungsnabe 132 indirekt ggf. auch direkt über zwei Axialrillenkugellager 140 axial ab, wobei die eigentliche Überlastkupplung 120 zwischen den Axialrillenkugellagern 140 in der Stellkraftkupplung 100 eingerichtet ist. Das Axialrillenkugellager 140 ist dabei bevorzugt als ein dreiteilig loses Axialrillenkugellager 140 ausgebildet.

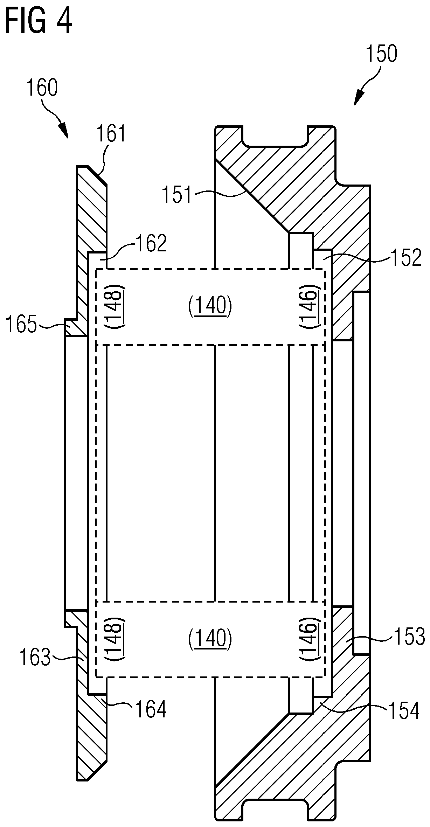

Eine einzelne zweiteilige Druckstückanordnung 150/160, vgl. auch die Fig. 4, umfasst zwei Druckstücke 150, 160 wobei ein erstes Druckstück 150 bevorzugt als ein (topfförmiger) Drucktopf 150 (vgl. die Fig. 4 rechts) und ein zweites Druckstück 160 bevorzugt als ein (deckelförmiger) Druckdeckel 160 ausgebildet sind. Ein betreffendes Axialrillenkugellager 140 ist dabei axial Ax zwischen den beiden Druckstücken 150, 160 in einer einzelnen Druckstückanordnung 150/160 eingerichtet. Ferner ist das jeweilige Axialrillenkugellager 140 bevorzugt radial Ra innen in der Druckstückanordnung 150/160 eingerichtet.

Für eine Aufnahme des jeweiligen Axialrillenkugellagers 140 in der betreffenden zweiteiligen Druckstückanordnung 150/160 weist das jeweilige Druckstück 150, 160 eine Lageraufnahme 152, 162 auf. Die jeweilige Lageraufnahme 152, 162 umfasst dafür eine umlaufende Axialschulter 154, 164. Ferner weist die jeweilige Lageraufnahme 152, 162 dafür einen Radialbund 153, 163 auf. D. h. das jeweilige Axialrillenkugellager 140 ist von den beiden Radialbünden 153, 163 axial Ax und von den Axialschultern 154, 164 radial Ra in der Druckstückanordnung 150/160 gehaltert, wobei eine antiparallele, mechanische Vorspannkraft der Druckstückanordnung 150/160 beidseitig auf das Axialrillenkugellager 140 aus der Vorspanneinrichtung 125 und einem Gegenlager (Lamellenpaket 113, 133) stammt.

Das jeweilige Axialrillenkugellager 140 ist mit einer Axiallagerschale 146, insbesondere einer kupplungsseitigen Axiallagerschale 146, in der Lageraufnahme 152 des Drucktopfs 150, und mit einer Axiallagerschale 148, insbesondere einer kupplungsabseitigen Axiallagerschale 148, in der Lageraufnahme 162 des Druckdeckels 160 eingerichtet. Zwischen den Axiallagerschalen 146, 148 befindet sich ein Kugelkäfig 147 mit den Wälzkugeln des Axialrillenkugellagers 140. - Das jeweilig verbaute Axialrillenkugellager 140 ist selbst durch sich bevorzugt axial nicht vorgespannt. Eine axiale Ax Vorspannung ergibt sich durch die zweiteilige Druckstückanordnung 150/160, deren Druckstücke 150, 160 axial Ax gegeneinander mechanisch vorgespannt (Vorspanneinrichtung 125) in der Stellkraftkupplung 100 eingerichtet sind.

Bei einem Umstellvorgang eines Weichenantriebs 1 (vgl. die Fig. 2) rotiert die Gewindespindel 134 um den Stellschieber 2 translatorisch zu bewegen. Dabei rotiert die Stellkraftkupplung 100. Am Ende des Umstellvorgangs soll eine entsprechende Endlage sowohl beim Ausfahren als auch bei Einfahren erreicht sein. Während des Umstellvorgangs und in der Phase ,Erreichen einer Endlage' wird die Überlastkupplung 120 in der Stellkraftkupplung 100 aktiv und unterbricht einen Kraftfluss (Begrenzung der Stellkraft). D. h. die Überlastkupplung 120 löst aus und die Rotationsbewegung des Antriebsmotors 22 zur Kupplungsnabe 132 wird unterbrochen.

Dabei und durch anderweitig über den Stellschieber 2 linear in die Stellkraftkupplung 100 eingeleitete Stöße (vgl. oben) kann es zu einem Schaden in der Stellkraftkupplung 100 kommen. Gemäß der Erfindung besteht das Problem bei einer konstruktiv bedingt fehlenden, beidseitigen axialen Vorspannung der sonst (also abseits der Begrenzung der Stellkraft) axial Ax nicht belasteten Axialrillenkugellager (vgl. auch oben die Erfindungsbeschreibung), sowohl beim Umstellen als auch bei Erreichen einer Endlage (Auslösen der Kupplung). Dadurch entsteht ein undefinierter Zustand. Es kann zum Abheben und Abrücken der Lagerelemente (Axiallagerschalen, Kugelkäfig) zueinander kommen. Dadurch kann ein Lagerschaden entstehen, was zu einem funktionellen Versagen des Weichenantriebs 1 führen kann.

Um dem zu begegnen ist ein einteiliges Druckstück als zweiteilige Druckstückanordnung 150/160 ausgebildet, deren Druckstücke 150, 160 mechanisch gegeneinander vorgespannt sind (Vorspanneinrichtung 125 und Gegenlager). Vgl. auch oben die Erfindungsbeschreibung. - Hierdurch bleibt ein axialer Kraftfluss einer nicht-ausgelösten Stellkraftkupplung 100 gegenüber einer Stellkraftkupplung ohne zweiteilige Druckstückanordnung 150/160 über das jeweilige Axialrillenkugellager 140 erhalten. Durch das Einrichten der zweiteiligen Druckstückanordnung 150/160 wird ein zusätzlicher Kraftfluss in der Stellkraftkupplung 100 eingerichtet. Dieser Kraftfluss geht vom zweiten Druckstück 160 (Druckdeckel 160) über das Axialrillenkugellager 140 auf das erste Druckstück 150 (Drucktopf 150) und vice versa.

Ein Kraftfluss einer ausgelösten Stellkraftkupplung 100 ergibt sich für eine belastete Seite der Stellkraftkupplung 100 analog zu einer Stellkraftkupplung 100 mit einteiligen Druckstücken. Das jeweilige Axialrillenkugellager 140 befindet sich im Kraftfluss zwischen der Gewindespindel 134 und der Vorspanneinrichtung 125 (jedoch Problem des schlagartigen Aufeinanderpressens der Lagerelemente, vgl. im Folgenden). - Ein Kraftfluss einer ausgelösten Stellkraftkupplung 100 ergibt sich für eine entlastete Seite der Stellkraftkupplung 100 von der Vorspanneinrichtung 125 (über das zweite Druckstück 160) über das Axialrillenkugellager 140 (über das erste Druckstück 150) zum Kupplungsgehäuse 110 und/oder der Kupplungsnabe 132, bzw. vice versa.

Fehlt die jeweilige zweiteilige Druckstückanordnung 150/160 so liegen die Axialrillenkugellager 140 der nicht-ausgelösten Überlastkupplung 120 nicht in einem Kraftfluss, eine axiale Vorspannung der Axialrillenkugellager 140 existiert nicht. - Bei einem Auslösen der Überlastkupplung 120 erfolgt dann für eine belastete Seite der Stellkraftkupplung 100 eine axiale Ax Vorspannung des betreffenden Axialrillenkugellagers 140 schlagartig. Die Lagerelemente (Axiallagerschalen 146, 148, Kugelkäfig 147) werden schlagartig aufeinander gepresst, was zu Schänden im und am betreffenden Axialrillenkugellager 140 führen kann.

Mittels der zweiteiligen Druckstückanordnung 150/160 erfolgt eine konstante Aufbringung einer axialen Vorspannung des betreffenden Axialrillenkugellagers 140 auch dann, wenn das jeweilige Axialrillenkugellager 140 durch Auslösung der Überlastkupplung 120 entlastet wird und ist. Das schlagartige Aufeinanderpressen der Axiallagerschalen 146, 148 und des Kugelkäfigs 147 ist wirksam vermieden.

### Bezugszeichenliste

- 1: Weichenantrieb

- 2: Stellschieber
- 4: Verstelleinrichtung
- 10: Stellmodul
- 20: Antriebsmodul
- 22: Antriebsmotor
- 30: Getriebestufe
- 40: Stelleinrichtung
- 42: Stellkraftkupplung
- 44: Verstellvorrichtung
- 52: Gewindespindel
- 62: Auffahrmechanismus
- 63: Kupplungsgehäuse
- 64: Festhaltekupplung
- 65: (erster) Anschlag
- 66: (zweiter) Anschlag
- 70: Sperreinrichtung
- 72: (erster) Sperrschieber
- 74: (zweiter) Sperrschieber

- 100: Stellkraftkupplung
- 110: Kupplungsgehäuse
- 112: Antriebsrad
- 113: (Außen-)Lamelle
- 120: Überlastkupplung
- 124: Innenschulter der Druckstückanordnung 150/160
- 125: Vorspanneinrichtung
- 127: Einstellglied
- 130: Spindel-Nabe-Verbindung
- 131: Außenschulter der Kupplungsnabe 132
- 132: Kupplungsnabe
- 133: (Innen-)Lamelle
- 134: Gewindespindel

- 140: Axialrillenkugellager, bevorzugt dreiteilig lose
- 146: (kupplungsseitige) Axiallagerschale
- 147: Kugelkäfig (mit Wälzkugeln)
- 148: (kupplungsabseitige) Axiallagerschale

- 150: (erstes) Druckstück der zweiteiligen Druckstückanordnung 150/160, Drucktopf
- 151: Zentrierfläche, insbesondere Zentriertrichter oder Zentrierkonus
- 152: Lageraufnahme
- 153: Radialbund
- 154: Axialschulter
- 160: (zweites) Druckstück der zweiteiligen Druckstückanordnung 150/160, Druckdeckel
- 161: Zentrierfläche, insbesondere Zentrieraußenrand mit Zentrierkonus
- 162: Lageraufnahme
- 163: Radialbund
- 164: Axialschulter für Axiallagerschale 148
- 165: Axialschulter für Vorspanneinrichtung 125

- Ax: Axialrichtung der Stellkraftkupplung 100, des Axialrillenkugellagers 140, der Druckstückanordnung 150/160 etc.
- Ra: Radialrichtung der Stellkraftkupplung 100, des Axialrillenkugellagers 140, der Druckstückanordnung 150/160 etc.
- Um: Umfangsrichtung der Stellkraftkupplung 100, des Axialrillenkugellagers 140, der Druckstückanordnung 150/160 etc.

- 8: (Bahn-)Weiche
- 81: erster Fahrweg
- 82: zweiter Fahrweg
- 83: Radlenker
- 84: Herzstück

## Patentansprüche

1. Stellkraftkupplung (100), insbesondere für einen elektromechanischen Weichenantrieb (1) im Bahnverkehr, mit einer um eine Axialrichtung (Ax) der Stellkraftkupplung (100) herum rotierbar antreibbaren Kupplungsnabe (132), in welcher eine Gewindespindel (134) montierbar ist, wobei
• die Kupplungsnabe (132) über eine Überlastkupplung (120) mit einem rotierbaren Kupplungsgehäuse (110) der Stellkraftkupplung (100) mechanisch gekoppelt ist,
• das Kupplungsgehäuse (110) mittels zweier koaxialer Axialrillenkugellager (140, 140) auf der Kupplungsnabe (132) drehbar gelagert ist und
• mittels einer betreffenden zweiteiligen Druckstückanordnung (150/160) ein jeweiliges Axialrillenkugellager (140) in Axialrichtung (Ax) mechanisch zusammengespannt in der Stellkraftkupplung (100) eingerichtet ist,
**dadurch gekennzeichnet, dass**
ein erstes Druckstück (150) der zweiteiligen Druckstückanordnung (150/160) als ein Drucktopf (150) und ein zweites Druckstück (160) der zweiteiligen Druckstückanordnung (150/160) als ein Druckdeckel (160) ausgebildet ist, wobei
• der Drucktopf (150) in einem radialen (Ra) Außenabschnitt eine als ein innenwandiger Zentriertrichter oder Zentrierkonus ausgebildete Zentrierfläche (151) für eine Zentrierfläche (161) des Druckdeckels (160) aufweist, und
• der Druckdeckel (160) an einem radialen (Ra) Außenrand die Zentrierfläche (161) für die Zentrierfläche (151) des Drucktopfs (160) aufweist, welche als Zentrieraußenrand mit Zentrierkonus ausgebildet ist.

2. Stellkraftkupplung (100) gemäß vorhergehendem Anspruch, **dadurch gekennzeichnet, dass**:
• das jeweilige Axialrillenkugellager (140) als eine dreiteilig lose oder eine einteilige Baugruppe (140) ausgebildet ist,
• die Axiallagerschalen (146, 148) des jeweiligen Axialrillenkugellagers (140) in horizontaler Axialrichtung (Ax) angeordnet sind, und/oder
• das jeweilige Axialrillenkugellager (140) selbst als ein spielarmes oder ein mechanisch vorgespanntes Axialrillenkugellager ausgebildet ist.

3. Stellkraftkupplung (100) gemäß einem der vorhergehenden Ansprüche, **dadurch gekennzeichnet, dass** die Stellkraftkupplung (100) derart ausgebildet ist, dass:
• in einem Stellbetrieb der Stellkraftkupplung (100) die Überlastkupplung (120) im Wesentlichen geschlossen bleibt,
• bei einem Begrenzen einer Stellkraft der Gewindespindel (134) durch die Stellkraftkupplung (100), die Überlastkupplung (120) gelöst ist, und/oder
• beim Begrenzen der Stellkraft die axial (Ax) gegeneinander vorgespannten Lamellen (113, 133) der Überlastkupplung (120) aneinander vorbeigleiten.

4. Stellkraftkupplung (100) gemäß einem der vorhergehenden Ansprüche, **dadurch gekennzeichnet, dass** die Kupplungsnabe (132) radial (Ra) innerhalb der Überlastkupplung (120) eingerichtet ist, wobei:
• sich die Kupplungsnabe (132) über eine betreffende Druckstückanordnung (150/160) mit einem jeweiligen Axialrillenkugellager (140) in der Überlastkupplung (120) axial (Ax) abstützt,
• die zwei Druckstückanordnungen (150/160) auf ein Lamellenpaket (113, 133; ...) der Überlastkupplung (120) axial (Ax) vorgespannt einwirken, und/oder
• das Lamellenpaket (113, 133; ...) der Überlastkupplung (120) axial (Ax) zwischen den Axialrillenkugellagern (140) eingerichtet ist.

5. Stellkraftkupplung (100) gemäß einem der vorhergehenden Ansprüche, **dadurch gekennzeichnet, dass** sich die Kupplungsnabe (132) über ein jeweiliges Axialrillenkugellager (140) axial abstützt, wobei
• eine kupplungsseitige Axiallagerschale (146) des jeweiligen Axialrillenkugellagers (140) axial unmittelbar oder mittelbar an der Kupplungsnabe (132) ansitzt,
• zwischen der Kupplungsnabe (132) und dem jeweiligen Axialrillenkugellager (140) eine Innenschulter (124) der Druckstückanordnung (150/160) eingerichtet ist,
• eine/die kupplungsseitige Axiallagerschale (146) des jeweiligen Axialrillenkugellagers (140) radial unmittelbar auf der Kupplungsnabe (132) sitzt, und/oder
• die Druckstückanordnung (150/160) axial unmittelbar oder mittelbar an einem Lamellenpakt (113, 133) der Überlastkupplung (120) ansitzt.

6. Stellkraftkupplung (100) gemäß einem der vorhergehenden Ansprüche, **dadurch gekennzeichnet, dass**:
• die beiden Druckstücke (150, 160) das jeweilige Axialrillenkugellager (140) axial (Ax) zwischen sich aufnehmen,
• die mechanische Zusammenspannung in Axialrichtung (Ax) unmittelbar von den beiden Druckstücken (150, 160) auf das jeweilige Axialrillenkugellager (140) ausgeübt ist, und/oder
• die betreffende Druckstückanordnung (150/160) und das jeweilige Axialrillenkugellager (140) als eine bevorzugt dreiteilige oder fünfteilige Ringanordnung (140/150/160) ausgebildet ist.

7. Stellkraftkupplung (100) gemäß einem der vorhergehenden Ansprüche, **dadurch gekennzeichnet, dass** bei geschlossener Überlastkupplung (120) in der Stellkraftkupplung (100):
• eine Vorspanneinrichtung (125) eine mechanische Vorspannkraft axial (Ax) auf das zweite Druckstück (160) ausübt,
• das zweite Druckstück (160) eine mechanische Vorspannkraft axial (Ax) auf das jeweilige Axialrillenkugellager (140) ausübt,
• das jeweilige Axialrillenkugellager (140) eine mechanische Vorspannkraft axial (Ax) auf das erste Druckstück (150) ausübt, und/oder
• das erste Druckstück (150) eine mechanische Vorspannkraft axial (Ax) auf ein/das Lamellenpakt (113, 133) ausübt.

8. Stellkraftkupplung (100) gemäß einem der vorhergehenden Ansprüche, **dadurch gekennzeichnet**:
• der Drucktopf (150) und der Druckdeckel (160) jeweils eine Lageraufnahme (152, 162) für das jeweilige Axialrillenkugellager (140) aufweisen,
• eine einzelne Lageraufnahme (152, 162) einen Radialbund (153, 163) und eine Axialschulter (145, 164) des Druckstücks (150, 160) aufweist, und/oder
• der Druckdeckel (160) eine Axialschulter (165) für ein Zentrieren der Vorspanneinrichtung (125) am Druckdeckel (160) aufweist.

9. Stellkraftkupplung (100) gemäß einem der vorhergehenden Ansprüche, **dadurch gekennzeichnet, dass**:
• die Druckstückanordnung (150/160) in Axialrichtung (Ax) verlagerbar,
• das erste Druckstück (150) in Umfangsrichtung (Ax) verlagerbar oder festgelegt, und/oder
• das zweite Druckstück (160) in Umfangsrichtung (Ax) verlagerbar im Kupplungsgehäuse (110) eingerichtet ist.

10. Stellkraftkupplung (100) gemäß einem der vorhergehenden Ansprüche, **dadurch gekennzeichnet, dass**:
• die zwei Druckstückanordnungen (150/160) axial (Ax) außen jeweils von einer/der Vorspanneinrichtung (125) gegeneinander axial (Ax) vorgespannt in der Stellkraftkupplung (100) eingerichtet sind,
• eine mechanische Vorspannung der jeweiligen Vorspanneinrichtung (125) von einem jeweils axial (Ax) außen an der Vorspanneinrichtung (125, 125) eingerichteten Einstellglied (127, 127) einstellbar und aufrechterhalten ist, und/oder
• das jeweilige Einstellglied (127) innen im Kupplungsgehäuse (110) eingerichtet ist, wobei das Einstellglied (127) bevorzugt mittels einer Einstellverschraubung in Axialrichtung (Ax) verstellbar im Kupplungsgehäuse (110) eingerichtet ist.

11. Elektromechanische Stelleinrichtung (4) für einen Weichenantrieb (1) im Bahnverkehr, **dadurch gekennzeichnet, dass** die Stelleinrichtung (4) einen Antriebsmotor (22) und eine Stellkraftkupplung (100) umfasst, wobei die Stellkraftkupplung (100) gemäß einem der vorhergehenden Ansprüche ausgebildet ist.

12. Weichenantrieb (1) für den Bahnverkehr, **dadurch gekennzeichnet, dass** der Weichenantrieb (1) eine Stelleinrichtung (4) und/oder eine Stellkraftkupplung (100) umfasst, wobei die Stelleinrichtung (4) nach Anspruch 11 und/oder die Stellkraftkupplung (100) gemäß einem der vorhergehenden Ansprüche 1 bis 10 ausgebildet ist.

## Claims

1. Actuating force coupling (100), in particular for an electromechanical point machine (1) in railway traffic, having a coupling hub (132) which can be driven in a rotatable manner about an axial direction (Ax) of the actuating force coupling (100), in which coupling hub a threaded spindle (134) can be mounted, wherein
• the coupling hub (132) is mechanically coupled by way of an overload coupling (120) to a rotatable coupling housing (110) of the actuating force coupling (100),
• the coupling housing (110) is mounted in a rotatable manner on the coupling hub (132) by means of two coaxial axial groove ball bearings (140, 140) and
• by means of an associated two-part pressure piece arrangement (150/160) a respective axial groove ball bearing (140) is set up in the axial direction (Ax) such that it is mechanically clamped together in the actuating force coupling (100),
**characterised in that**
a first pressure piece (150) of the two-part pressure piece arrangement (150/160) is embodied as a pressure vessel (150) and a second pressure piece (160) of the two-part pressure piece arrangement (150/160) is embodied as a pressure cover (160), wherein
• the pressure vessel (150) has a centring surface (151) embodied as an inner-wall centring funnel or centring cone for a centring surface (161) of the pressure cover (160),
and
• the pressure cover (160), on a radial (Ra) outer edge, has the centring surface (161) for the centring surface (151) of the pressure vessel (160), embodied as a centring outer edge with a centring cone.

2. Actuating force coupling (100) according to the preceding claim, **characterised in that**:
• the respective axial groove ball bearing (140) is embodied as a three-part loose or a single-part module (140),
• the axial bearing shells (146, 148) of the respective axial groove ball bearing (140) are arranged in the horizontal axial direction (Ax), and/or
• the respective axial groove ball bearing (140) is itself embodied as a low-backlash or mechanically pretensioned axial groove ball bearing.

3. Actuating force coupling (100) according to one of the preceding claims, **characterised in that** the actuating force coupling (100) is embodied such that:
• the overload coupling (120) remains substantially closed in an actuating operation of the actuating force coupling (100),
• if an actuating force of the threaded spindle (134) is limited by the actuating force coupling (100), the overload coupling (120) is released, and/or
• if the actuating force is limited, the plates (113, 133) of the overload coupling (120) which are pretensioned axially (Ax) against one another slide past one another.

4. Actuating force coupling (100) according to one of the preceding claims, **characterised in that** the coupling hub (132) is set up radially (Ra) within the overload coupling (120), wherein:
• the coupling hub (132) is supported axially (Ax) by way of an associated pressure piece arrangement (150/160) with a respective axial groove ball bearing (140) in the overload coupling (120),
• the two pressure piece arrangements (150/160) act in an axially (Ax) pretensioned manner on a plate stack (113, 133; ...) of the overload coupling (120), and/or
• the plate stack (113, 133; ...) of the overload coupling (120) is set up axially (Ax) between the axial groove ball bearings (140).

5. Actuating force coupling (100) according to one of the preceding claims, **characterised in that** the coupling hub (132) is supported axially by way of a respective axial groove ball bearing (140), wherein
• a coupling-side axial bearing shell (146) of the respective axial groove ball bearing (140) rests axially directly or indirectly on the coupling hub (132),
• an inner shoulder (124) of the pressure piece arrangement (150/160) is set up between the coupling hub (132) and the respective axial groove ball bearing (140),
• a/the coupling-side axial bearing shell (146) of the respective axial groove ball bearing (140) rests radially directly on the coupling hub (132), and/or
• the pressure piece arrangement (150/160) rests axially directly or indirectly on a plate stack (113, 133) of the overload coupling (120).

6. Actuating force coupling (100) according to one of the preceding claims, **characterised in that**:
• the two pressure pieces (150, 160) receive the respective axial groove ball bearing (140) axially (Ax) between one another,
• the mechanical clamping together in the axial direction (Ax) is effected directly by the two pressure pieces (150, 160) onto the respective axial groove ball bearing (140), and/or
• the associated pressure piece arrangement (150/160) and the respective axial groove ball bearing (140) is embodied as a preferably three-part or five-part ring arrangement (140/150/160).

7. Actuating force coupling (100) according to one of the preceding claims, **characterised in that**, when the overload coupling (120) is closed, in the actuating force coupling (100):
• a pretensioning facility (125) exerts a mechanical pretensioning force axially (Ax) onto the second pressure piece (160),
• the second pressure piece (160) exerts a mechanical pretensioning force axially (Ax) onto the respective axial groove ball bearing (140),
• the respective axial groove ball bearing (140) exerts a mechanical pretensioning force axially (Ax) onto the first pressure piece (150), and/or
• the first pressure piece (150) exerts a mechanical pretensioning force axially (Ax) onto a/the plate stack (113, 133).

8. Actuating force coupling (100) according to one of the preceding claims, **characterised in that**:
• the pressure vessel (150) and the pressure cover (160) in each case have a bearing receptacle (152, 162) for the respective axial groove ball bearing (140),
• an individual bearing receptacle (152, 162) has a radial collar (153, 163) and an axial shoulder (145, 164) of the pressure piece (150, 160), and/or
• the pressure cover (160) has an axial shoulder (165) for centring the pretensioning facility (125) on the pressure cover (160).

9. Actuating force coupling (100) according to one of the preceding claims, **characterised in that**:
• the pressure piece arrangement (150/160) is set up in a displaceable manner in the axial direction (Ax),
• the first pressure piece (150) is set up in a displaceable or fixed manner in the circumferential direction (Ax), and/or
• the second pressure piece (160) is set up in a displaceable manner in the circumferential direction (Ax) in the coupling housing (110).

10. Actuating force coupling (100) according to one of the preceding claims, **characterised in that**:
• the two pressure piece arrangements (150/160) are set up axially (Ax) externally pretensioned axially (Ax) against one another in each case by a/the pretensioning facility (125) in the actuating force coupling (100),
• a mechanical pretensioning of the respective pretensioning facility (125) can be adjusted and is maintained by an adjustment element (127, 127) set up in each case axially (Ax) externally on the pretensioning facility (125, 125), and/or
• the respective adjustment element (127) is set up internally in the coupling housing (110), wherein the adjustment element (127) is preferably set up to be adjustable in the axial direction (Ax) in the coupling housing (110) by means of an adjustment screw joint.

11. Electromechanical actuating facility (4) for a point machine (1) in railway traffic, **characterised in that** the actuating facility (4) comprises a drive motor (22) and an actuating force coupling (100), wherein the actuating force coupling (100) is embodied according to one of the preceding claims.

12. Point machine (1) for railway traffic, **characterised in that** the point machine (1) comprises an actuating facility (4) and/or an actuating force coupling (100), wherein the actuating facility (4) is embodied according to claim 11 and/or the actuating force coupling (100) is embodied according to one of the preceding claims 1 to 10.

## Revendications

1. Embrayage (100) à force de réglage, en particulier pour un mécanisme (1) électromécanique de commande d'aiguille de la circulation ferroviaire, comprenant un moyeu (132) d'embrayage, qui peut être entraîné en rotation autour d'une direction (Ax) axiale de l'embrayage (100) à force de réglage et dans lequel une broche (134) filetée peut être montée, dans lequel
• le moyeu (132) de l'embrayage est, par un embrayage (120) de surcharge, accouplé mécaniquement à un carter (110) tournant de l'embrayage (100) à force de réglage,
• le carter (110) de l'embrayage est, au moyen de deux paliers (140, 140) à billes rainurés axiaux coaxiaux, monté tournant sur le moyeu (132) de l'embrayage et
• au moyen d'un agencement (150/160) de pièces de poussée approprié en deux parties, un palier (140) à billes rainuré axial respectif est disposé dans l'embrayage (100) à force de réglage en étant resserré mécaniquement dans la direction (Ax) axiale,
**caractérisé en ce qu'**
une première pièce (150) de poussée de l'agencement (150/160) de pièces de poussée en deux parties est constituée sous la forme d'une boîte (150) de sécurité et une deuxième pièce (160) de poussée de l'agencement (150/160) de pièces de poussée en deux parties est constituée sous la forme d'un couvercle (160) de poussée, dans lequel
• la boîte (150) de sécurité a, dans une partie extérieure (Ra) radiale, une surface (151) de centrage, constituée sous la forme d'une trémie de centrage à paroi intérieure ou d'un cône de centrage, d'une surface (161) de centrage du couvercle (160) de poussée, et
• le couvercle (160) de poussée a, sur un bord extérieur radial (Ra), la surface (161) de centrage de la surface (151) de centrage de la boîte (160) de sécurité, qui est constituée sous la forme d'un bord extérieur de centrage à cône de centrage.

2. Embrayage (100) à force de réglage suivant la revendication précédente, **caractérisé en ce que**
• le palier (140) à billes rainuré axial respectif est constitué sous la forme d'un module (140) libre en trois parties ou d'un module en une seule partie,
• les coquilles (146, 148) de palier axial du palier (140) à billes rainuré axial respectif sont disposées dans une direction (Ax) axiale horizontale, et/ou
• le palier (140) à billes rainuré axial respectif est constitué soi-même sous la forme d'un palier à billes rainuré axial sans jeu ou précontraint mécaniquement.

3. Embrayage (100) à force de réglage suivant l'une des revendications précédentes, **caractérisé en ce que** l'embrayage (100) à force de réglage est constitué, de manière à ce que :
• dans un fonctionnement de réglage de l'embrayage (100) à force de réglage, l'embrayage (120) de surcharge reste sensiblement fermé,
• lors d'une limite d'une force de réglage de la broche (134) filetée par l'embrayage (100) à force de réglage, l'embrayage (120) de surcharge est débrayé, et/ou
• lors de la limite de la force de réglage, les lamelles (113, 133) précontraintes axialement (Ax) les unes par rapport aux autres de l'embrayage (120) de surcharge glissent les unes sur les autres.

4. Embrayage (100) à force de réglage suivant l'une des revendications précédentes, **caractérisé en ce que** le moyeu (132) de l'embrayage est disposé radialement (Ra) à l'intérieur de l'embrayage (120) de surcharge, dans lequel :
• le moyeu (132) de l'embrayage s'appuie axialement (Ax) dans l'embrayage (120) de surcharge par un palier (140) à billes rainuré axial respectif en passant par un agencement (150/160) de pièces de poussée approprié,
• les deux agencements (150/160) de pièces de poussée agissent de manière précontrainte axialement (Ax) sur un paquet (113, 133 ; ...) de lamelles de l'embrayage (120) de surcharge, et/ou
• le paquet (113, 133 ; ...) de lamelles de l'embrayage (120) de surcharge est disposé axialement (Ax) entre les paliers (140) à billes rainurés axiaux.

5. Embrayage (100) à force de réglage suivant l'une des revendications précédentes, **caractérisé en ce que** le moyeu (132) de l'embrayage s'appuie axialement sur un palier (140) à billes rainuré axial respectif, dans lequel
• une coquille (146) de palier axial, du côté de l'embrayage, du palier (140) à billes rainuré axial respectif est assise indirectement ou directement sur le moyeu (132) de l'embrayage,
• un épaulement (124) intérieur de l'agencement (150/160) de pièces de poussée est disposé entre le moyeu (132) de l'embrayage et le palier (140) à billes rainuré axial respectif,
• une/la coquille (146) de palier axial, du côté de l'embrayage, du palier (140) à billes rainuré axial est assise directement radialement sur le moyeu (132) de l'embrayage, et/ou
• l'agencement (150/160) de pièces de poussée est assis axialement directement ou indirectement sur un paquet (113, 133) de l'embrayage (120) de surcharge.

6. Embrayage (100) à force de réglage suivant l'une des revendications précédentes, **caractérisé en ce que**
• les deux pièces (150, 160) de poussée reçoivent entre elles axialement (Ax) le palier (140) à billes rainuré axial respectif,
• le co-serrage mécanique dans la direction (Ax) axiale est appliqué directement par les deux pièces (150, 160) de poussée sur le palier (140) à billes rainuré axial respectif, et/ou
• l'agencement (150/160) de pièces de poussée approprié et le palier (140) à billes rainuré axial respectif est constitué sous la forme d'un agencement (140/150/160) annulaire, de préférence en trois parties ou en cinq parties.

7. Embrayage (100) à force de réglage suivant l'une des revendications précédentes, **caractérisé en ce que**, lorsque l'embrayage (120) de surcharge est enfermé dans l'embrayage (100) à force de réglage :
• un dispositif (125) de précontrainte applique une force de précontrainte mécanique axialement (Ax) à la deuxième pièce (160) de poussée,
• la deuxième pièce (160) de poussée applique une force de précontrainte mécanique axialement (Ax) au palier (140) à billes rainuré axial respectif,
• le palier (140) à billes rainuré axial respectif applique une force de précontrainte mécanique axialement (Ax) à la première pièce (150) de poussée, et/ou
• la première pièce (150) de poussé applique une force de précontrainte mécanique axialement (Ax) à un/le paquet (113, 133) de lamelles.

8. Embrayage (100) à force de réglage suivant l'une des revendications précédentes, **caractérisé en ce que** :
• la boîte (150) de sécurité et le couvercle (160) de poussée ont chacun un logement (152, 162) de palier pour le palier (140) à billes rainuré axial respectif,
• le logement (152, 162) de palier individuel a un collier (153, 163) radial et un épaulement (145, 164) axial de la pièce (150, 160) de poussée, et/ou
• le couvercle (160) de poussée a un épaulement (165) axial pour un centrage du dispositif (125) de précontrainte au couvercle (160) de poussée.

9. Embrayage (100) à force de réglage suivant l'une des revendications précédentes, **caractérisé en ce qu'**est disposé, dans le carter (110) de l'embrayage :
• de manière à pouvoir être déplacé dans la direction (Ax) axiale, l'agencement (150/160) de pièces de poussée,
• la première pièce (150) de poussée, de manière à pouvoir être déplacée dans la direction (Ax) périphérique ou en étant fixée, et/ou
• la deuxième pièce (160) de poussée, de manière à pouvoir être déplacée dans la direction (Ax) périphérique.

10. Embrayage (100) à force de réglage suivant l'une des revendications précédentes, **caractérisé en ce que** :
• les deux agencements (150/160) de pièces de poussée sont disposés dans l'embrayage (100) à force de réglage en étant précontraints axialement (Ax) l'un par rapport à l'autre axialement (Ax) à l'extérieur respectivement par un/le dispositif (125) de précontrainte,
• une précontrainte mécanique du dispositif (125) respectif de précontrainte est réglable par un organe (127, 127) de réglage disposé à l'extérieur axialement (Ax) sur le dispositif (125, 125) de précontrainte et est maintenue, et/ou
• l'organe (127) respectif de réglage est disposé à l'intérieur dans le carter (110) de l'embrayage, dans lequel l'organe (127) de réglage est, de préférence au moyen d'un vissage de réglage, disposé dans le carter (110) de l'embrayage de manière réglable dans la direction (Ax) axiale.

11. Dispositif (4) électromécanique de réglage d'un mécanisme (1) de commande d'aiguille dans la circulation ferroviaire, **caractérisé en ce que** le dispositif (4) de réglage comprend un moteur (22) d'entraînement et un embrayage (100) à force de réglage, dans lequel l'embrayage (100) à force de réglage est constitué suivant l'une des revendications précédentes.

12. Mécanisme (1) de commande d'aiguille pour la circulation ferroviaire, **caractérisé en ce que** le mécanisme (1) de commande d'aiguille comprend un dispositif (4) de réglage et/ou un embrayage (100) à force de réglage, dans lequel le dispositif (4) de réglage est constitué suivant la revendication 11 et/ou l'embrayage (100) à force de réglage est constitué suivant l'une des revendications 1 à 10 précédentes.
